# EUROPÄISCHE PATENTSCHRIFT

(11) **EP 1 137 893 B1**
(45) Veröffentlichungstag und Bekanntmachung des Hinweises auf die Patenterteilung: **14.08.2002**
(21) Anmeldenummer: 99973427.0
(22) Anmeldetag: 30.10.1999
(51) Int. Cl.: F16L 37/088

(54) **KUPPLUNGSEINRICHTUNG MIT BLOCKIERVORRICHTUNG**
COUPLING SYSTEM WITH BLOCKING DEVICE
DISPOSITIF D'ACCOUPLEMENT MUNI D'UN SYSTEME DE BLOCAGE

(30) Priorität: 11.12.1998 DE 19857144; 08.07.1999 DE 19931753
(43) Veröffentlichungstag der Anmeldung: 04.10.2001
(73) Patentinhaber: Eaton Fluid Power GmbH, 76532 Baden-Baden (DE)
(72) Erfinder: LUFT, Thomas, D-76474 Au am Rhein (DE); STUMPF, Robert, 80995 München (DE); SCHMID, Johannes, 85241 Hebertshausen (DE)
(74) Vertreter: Gleiss, Alf-Olav, Dr.jur. Dipl.-Ing.
(86) Internationale Anmeldenummer: EP9908293
(87) Internationale Veröffentlichungsnummer: WO0036328

(56) Entgegenhaltungen:
- US-A- 5 553 895
- US-A- 5 570 910
- US-A- 5 718 459

## Beschreibung

Die Erfindung betrifft eine Kupplungseinrichtung zum Verbinden von zwei Teilen, mit einem Steckerteil und einem Buchsenteil, die ineinander steckbar ausgebildet und mittels eines aufweitbaren Sicherungsrings verriegelbar sind, gemäß Oberbegriff des Anspruchs 1.

Kupplungseinrichtungen der hier angesprochenen Art sind bekannt (US 55 53 895 A). Es hat sich gezeigt, daß zum Entriegeln derartiger Kupplungseinrichtungen zum Teil spezielle Werkzeuge eingesetzt werden müssen und daß zum Entriegeln vom Bediener eine relativ große Kraft aufgebracht werden muß, wobei trotz allem noch ein gewisses Geschick vom Bediener gefordert ist.

Es ist daher Aufgabe der Erfindung, eine Kupplungseinrichtung zu schaffen, die einen einfachen Aufbau aufweist und dabei auch ohne die Verwendung von Werkzeugen in einfacher Weise entriegelbar ist.

Zur Lösung dieser Aufgabe wird eine Kupplungseinrichtung vorgeschlagen, die die in Anspruch 1 genannten Merkmale aufweist. Die Kupplungseinrichtung zeichnet sich dadurch aus, daß die Löseeinrichtung eine Lösehülse umfaßt, die auf ihrer dem Buchsenteil abgewandten Seite mit einem Deckel verschließbar ist und daß mit Hilfe einer Blockiervorrichtung ein unbeabsichtigtes Lösen der Kupplung verhinderbar ist. Der Deckel dient in Kombination mit der Lösehülse als ein in die Kupplungseinrichtung integriertes Lösewerkzeug, das in vorteilhafter Weise durch das Aufbringen einer Druckkraft auf den Dekkel, beispielsweise mittels des Daumens einer Hand, betätigbar ist. Die zum Lösen der Verriegelung vom Bediener aufzubringenden Kräfte sind nur gering, wobei aufgrund der relativ großen Fläche zum Aufbringen der Druckkraft des vorzugsweise einen geschlossenen Deckelboden aufweisenden Deckels auch ein hoher Bedienungskomfort gewährleistet werden kann. Durch die Blockiervorrichtung kann gewährleistet werden, daß ein unbeabsichtigtes Lösen der Kupplung, zum Beispiel infolge von Steinschlag, ausgeschlossen ist.

Besonders bevorzugt wird ein Ausführungsbeispiel der Kupplungseinrichtung, bei dem der Deckel Teil der Blockiervorrichtung ist und in eine Sperrstellung und in eine Betätigungsstellung verlagerbar ist. In der Sperrstellung ist ein zerstörungsfreies Lösen der Kupplung nicht möglich. Der Deckel muß daher zunächst in die Betätigungsstellung verlagert, vorzugsweise verschwenkt werden, um die Verriegelung zu lösen. Der Deckel weist also eine Doppelfunktion auf, da er einerseits zusammen mit der Lösehülse als Lösewerkzeug zum Lösen der Verriegelung und andererseits als Sicherungselement gegen ein unbeabsichtigtes Lösen der Verriegelung dient.

Bei einem vorteilhaften Ausführungsbeispiel der Kupplungseinrichtung ist vorgesehen, daß der Deckel mit Hilfe einer -vorzugsweise nicht lösbaren-Schnappverbindung an der Lösehülse gehalten ist. In diesem Zusammenhang wird unter "nicht lösbar" verstanden, daß nach erfolgtem Aufbringen des Deckels auf die Lösehülse dieser nicht mehr abgenommen werden kann, ohne daß er selbst oder ein anderes Teil der Kupplungseinrichtung dabei beschädigt wird.

Durch die Ausgestaltung der als Schnapp- oder Rastverbindung ausgebildeten Verliersicherung für den Deckel ist nach dem ersten Verbinden des Deckels mit der Hülse ein quasi einteiliges Bauteil gebildet. Mithin ist der Deckel in einfacher Weise und vorzugsweise ohne ein Werkzeug montierbar, zum Beispiel durch Aufdrücken beziehungsweise Aufklippsen auf die Lösehülse.

Weitere vorteilhafte Ausführungsformen der Kupplungseinrichtung ergeben sich aus den übrigen Unteransprüchen.

Die Erfindung wird im folgenden anhand der Zeichnung näher erläutert. Es zeigen:
- Figur 1: einen Querschnitt durch ein erstes Ausführungsbeispiel der Kupplungseinrichtung;
- Figuren 2A und 2B: jeweils eine Seitenansicht eines Ausführungsbeispiels eines Deckels;
- Figur 3: einen Querschnitt durch den Deckel gemäß den Figuren 2A und 2B;
- Figuren 4A und 4B: eine Unteransicht und eine Drauf-sicht auf den in den Figuren 2A und 2B dargestellten Deckel;
- Figur 4C: eine Draufsicht auf eine weitere Ausführungsform des Deckels;
- Figur 5: einen stark vergrößerten Ausschnitt eines in Figur 3 mit "B" gekennzeichneten Bereichs des Deckels;
- Figur 6: eine perspektivische Darstellung eines Ausführungsbeispiels der Kupplungseinrichtung im gekuppelten Zustand, wobei der Deckel sich in einer Sperrstellung befindet;
- Figuren 7A und 7B: jeweils eine Seitenansicht der in Figur 6 dargestellten Kupplungseinrichtung;
- Figur 8: eine perspektivische Darstellung der in Figur 6 dargestellten Kupplungseinrichtung, wobei der Deckel sich in einer Betätigungsstellung befindet und
- Figuren 9A und 9B: jeweils eine Seitenansicht der in Figur 8 dargestellten Kupplungseinrichtung.

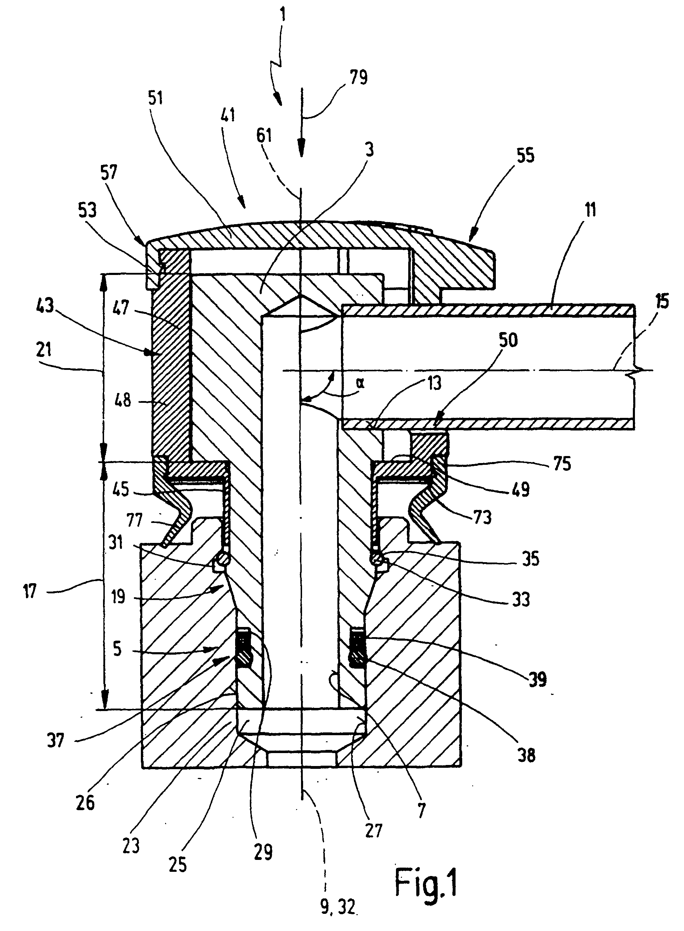

Figur 1 zeigt einen Querschnitt durch ein Ausführungsbeispiel einer Kupplungseinrichtung 1, die ein Steckerteil 3 und ein Buchsenteil 5 umfaßt. Das Buchsenteil ist bei diesem Ausführungsbeispiel rotationssymmetrisch ausgebildet. In das Steckerteil 3 ist eine Sackbohrung 7 eingebracht, die parallel zur Längsmittelachse 9 des Steckerteils 3 verläuft. Zum Anschluß des Steckerteils 3 an ein Rohr 11 ist im Bereich des Grunds der Sackbohrung 7 eine in diese mündende Querbohrung 13 eingebracht, in der das Ende des Rohrs 11 angeordnet ist. Anstelle des Rohrs 11 kann selbstverständlich auch ein Schlauch oder dergleichen mit dem Steckerteil 3 in geeigneter Weise verbunden werden. Das mit dem Steckerteil 3 verbundene Rohr 11 ist gegenüber dem Steckerteil 3 derart ausgerichtet, daß die Längsmittelachse 15 des Rohrs 11 orthogonal zur Längsmittelachse 9 des Steckerteils 3 verläuft.

Das Steckerteil 3 weist einen ersten, rotationssymmetrischen Längsabschnitt 17 auf, der einen durchmessergrößeren Abschnitt aufweist, der hier von einem umlaufenden Wulst 19 gebildet ist. Ferner weist das Steckerteil 3 einen zweiten, im Querschnitt ebenfalls rotationssymmetrischen Längsabschnitt 21 auf, auf dessen Funktion noch näher eingegangen wird.

Das bei diesem Ausführungsbeispiel rohrförmig ausgebildete Buchsenteil 5 kann mit einem Rohr, einem Schlauch oder dergleichen verbunden werden. Selbstverständlich ist es auch möglich, das Buchsenteil 5 in einen Anschlußblock zum Direktanschluß des Stekkerteils an ein beliebiges Aggregat, zum Beispiel an eine Pumpe, einen Behälter oder dergleichen, zu integrieren. Eine Wandung 23 des Buchsenteils 5 umschließt einen im Querschnitt kreisförmigen Innenraum 25, der zur Aufnahme des Längsabschnitts 17 des Steckerteils 3 ausgebildet ist. Mit Hilfe des Steckerteils 3 und dem Buchsenteil 5 soll eine dichte Verbindung zwischen den an den beiden Elementen angeschlossenen Rohren, Schläuchen beziehungsweise Aggregaten hergestellt werden.

Im Bereich des ersten Längsabschnitts 17 ist in die Außenseite 26 des Steckerteils 3 eine umlaufende Nut 29 eingebracht, die -in Längserstreckung des Steckerteils 3 gesehen- in einem Abstand zu einer in die Innenwandung 27 des Buchsenteils 5 eingebrachten, umlaufenden Nut 31 angeordnet ist. Die Abstände der Nuten 29, 31 zur Rotationsachse 32 des Buchsenteils 5 sind unterschiedlich. Wie aus Figur 1 ersichtlich, fallen hier die Rotationsachse 32 des Buchsenteils 5 und die Längsmittelachse 9 des Steckerteils 3 zusammen.

Im Bereich der oberen Nut 31 ist ein Sicherungsring 33 vorgesehen, der an einer schräg zur Rotationsachse 32 verlaufenden Fläche 35 der Nut 31 anliegt. Der Sicherungsring 33 ist bezüglich seines Durchmessers aufweitbar ausgebildet. Vorzugsweise wird ein an einer Stelle durchtrennter, auch als Sprengring bezeichneter Sicherungsring 33 verwendet. Der Durchmesser des Sicherungsrings 33 ist etwas größer gewählt als der Innendurchmesser des Innenraums 25. Zur Abdichtung der Verbindung zwischen dem Steckerteil 3 und dem Buchsenteil 5 ist ein Dichtmittel 37 vorgesehen, das bei diesem Ausführungsbeispiel von einem O-Ring 38 und einem Stützring 39 gebildet ist, die in der Nut 29 des Stekkerteils 3 angeordnet sind. Der Stützring 39 dient zur Abstützung des O-Rings 38 unter Druck. Das Dichtmittel 37 dichtet den Spalt zwischen dem Buchsenteil 5 und dem Steckerteil 3 ab.

Des weiteren weist die Kupplungseinrichtung 1 eine Löseeinrichtung 41 auf, die eine Lösehülse 43 umfaßt. Die Lösehülse 43 weist einen rohrförmigen ersten Längsabschnitt 45 und einen topfförmig ausgebildeten zweiten Längsabschnitt 47 auf, die einstückig miteinander verbunden sind. Der Außendurchmesser im Bereich des zweiten Längsabschnitts 47 ist größer als der im Bereich des ersten Längsabschnitts 45, wodurch ein umlaufender Bund gebildet ist. Das Steckerteil 3 ist in die Lösehülse 43 eingeschoben, derart, daß dessen erster, durchmesserkleinerer Längsabschnitt 17 im Bereich des ersten Längsabschnitts 45 der Lösehülse 43 im wesentlichen spielfrei und längsverschieblich geführt ist. Dies ist dadurch realisiert, daß der Innendurchmesser des ersten Längsabschnitts 45 der Lösehülse 43 im wesentlichen gleich groß ist wie der Außendurchmesser des ersten Längsabschnitts 17 des Steckerteils 3.

Der zweite Längsabschnitt 21 des Steckerteils 3 ist im Innern der Lösehülse 43 angeordnet beziehungsweise ist vom Mantel 48 der Lösehülse 43 vollständig eingeschlossen und liegt am Boden 49 des topfförmigen zweiten Längsabschnitts 47 der Lösehülse 43 an, während der erste Längsabschnitt 17 des Steckerteils 3 durch einen im Boden 49 vorgesehenen Durchbruch hindurchgesteckt ist. Die Höhe des zweiten Längsabschnitts 21 des Steckerteils 3 ist geringer als die des zweiten Längsabschnitts 47 der Lösehülse 43, so daß dieser Teil des Steckerteils 3 vollständig von der Wandung der Lösehülse 43 umgeben ist.

Wie aus Figur 1 ersichtlich, ist im Längsabschnitt 47 der Lösehülse 43 ein Durchbruch 50 eingebracht, durch den das Rohr 11 hindurchgesteckt ist. Die Längsmittelachse 15 des Rohrs 11 ist bei diesem Ausführungsbeispiel gegenüber der Rotationsachse 32 beziehungsweise der Längsmittelachse 9 des Steckerteils 3 um einen Winkel α von 90° geneigt. Der Winkel α, der in einem Bereich von 0° ≤ α <180° liegt, ist variierbar. Die Kupplungseinrichtung 1 zeichnet sich unter anderem auch dadurch aus, daß die zu verbindenden Teile (Aggregat, Pumpe, Behälter oder dergleichen) keine fluchtende Anordnung aufweisen müssen.

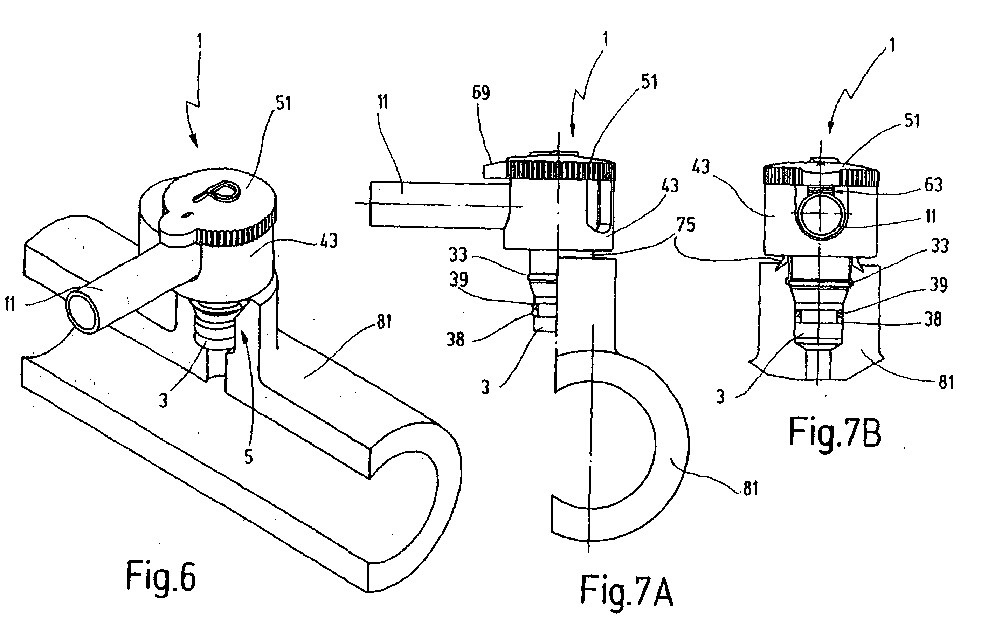

Die Lösehülse 43 ist auf ihrer dem Buchsenteil 5 abgewandten Seite mit einem Deckel 51 verschlossen, der einen umlaufenden Bund 53 aufweist, der einen ringförmigen Bereich des Längsabschnitts 47 der Lösehülse 43 übergreift. Der Deckel 51 ist Teil einer Blockiervorrichtung 55, worauf im folgenden noch näher eingegangen wird. Der Deckel 51 ist mit Hilfe einer Schnappverbindung 57 ,vorzugsweise unlösbar, mit der Lösehülse 43 verbunden, das heißt, nach einmaliger Montage des Deckels 51 ist dieser nicht wieder zerstörungsfrei von der Lösehülse 43 entfernbar. Somit kann ein Verlieren des Deckels mit Sicherheit ausgeschlossen werden. Die Schnappverbindung 57 ist bei diesem Ausführungsbeispiel von einer in der Außenseite des Mantels 48 des zweiten Längsabschnitts 47 der Lösehülse 43 eingebrachten, umlaufenden Nut und einem auf der Innenseite des Bunds 53 des Deckels 51 vorgesehenen Vorsprung 59 (Figur 5) gebildet. Der Vorsprung 59 greift in die Nut im Mantel 48 ein, derart, daß ein Abnehmen des Deckels 51 von der Lösehülse 43 nicht möglich ist. Der Vorsprung 59 und die Nut sind so aneinander angepaßt, daß bei eingerastetem Vorsprung 59 der Dekkel 51 trotzdem noch um seine Mittelachse 61 im und entgegen dem Uhrzeigersinn schwenkbar ist. Durch das Verschwenken ist der Deckel 51 in eine Sperrstellung, in der das Lösen der Verriegelung nicht möglich ist, und in eine Betätigungsstellung, in der das Lösen der Verriegelung möglich ist, verlagerbar.

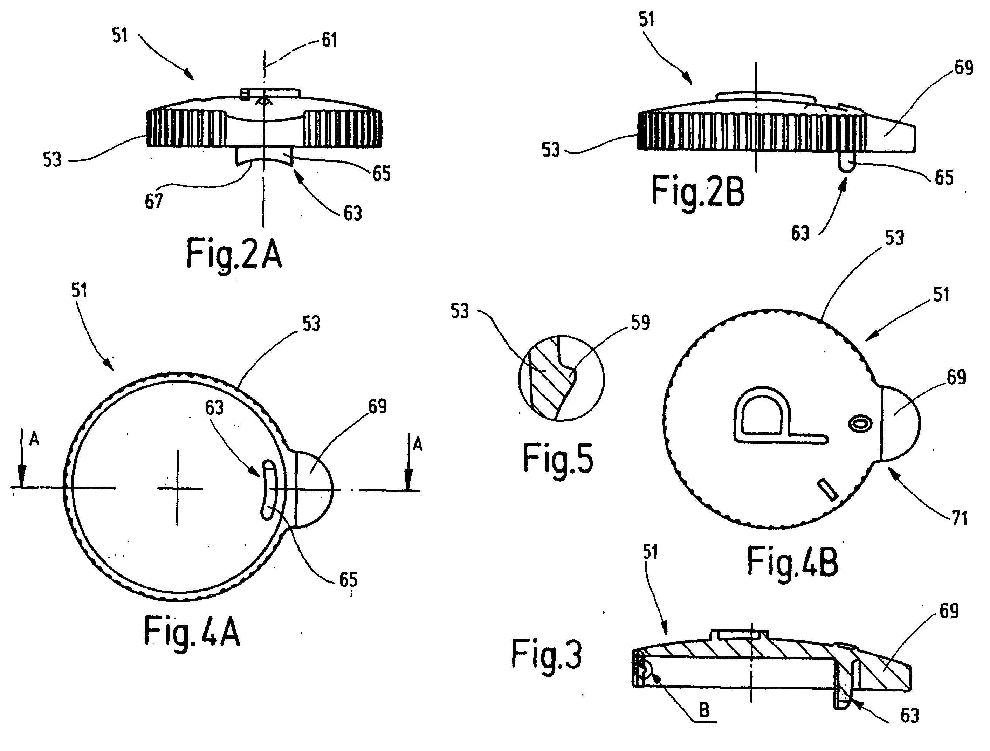

Figuren 2A und 2B zeigen jeweils eine Seitenansicht des Deckels 51, der bei diesem Ausführungsbeispiel auf der Außenseite des Bunds 53 eine durch vertikal verlaufende Vertiefungen gebildete, -in Umfangsrichtung des Bunds 53 gesehen- wellenförmige Oberfläche aufweist, die die Griffigkeit des schwenkbaren Deckels 51 erhöht. Auf der Innenseite des Dekkels 51 ist ein Arretierelement 63 angeordnet, das hier einstückig mit dem Deckel 51 verbunden ist. Das Arretierelement 63 ist von einer über einen kleinen Umfangsbereich des -in Draufsicht gesehenim wesentlichen kreisrunden Deckels 51 erstreckenden Wandung 65 gebildet. Diese besteht vorzugsweise aus einem eine gewisse Flexibilität aufweisenden Material. In der Sperrstellung des Deckels 51 (Figur 6) liegt die Wandung 65 an der Außenkontur eines Gegenelements an oder ist in einem Abstand zum Gegenelement angeordnet. Die Anlagefläche 67 der Wandung 65 ist vorzugsweise an die Außenkontur des Gegenelements angepaßt. Bei dem anhand von Figur 1 erläuterten Ausführungsbeispiel ist das Gegenelement von dem Rohr 11 gebildet. Daher weist die Anlagefläche 67 des Arretierelements 63 einen entsprechend gekrümmten, vorzugsweise bogenförmigen, Verlauf auf.

Wie aus den Figuren 4A und 4B, die eine Unteransicht beziehungsweise Draufsicht auf den Deckel 51 zeigen, ersichtlich, ist der Deckel 51 entsprechend der Querschnittsform der Lösehülse im Bereich ihres zweiten Längsabschnitts 47 im wesentlichen kreisrund ausgebildet. Auf der Deckeloberseite (Figur 4B) ist ein großes -P- eingearbeitet, das einem Benutzer anzeigen soll, daß hier ein Druckanschluß vorliegt. Außerdem weist der Deckel 51 einen Vorsprung 69 auf, der an der Außenumfangsfläche des Deckels 51, also dem Bund 53 entspringt und bei diesem Ausführungsbeispiel -in Draufsicht auf den Deckel 51 gesehen- nasenförmig ausgebildet ist. Der Vorsprung 69 dient in Verbindung mit einem ortsfest angeordneten Punkt beziehungsweise Teil, zum Beispiel dem Rohr 11, als Anzeigemittel 71 für einen Bediener. Im montierten Zustand des Deckels 51 entspricht eine erste Relativposition des Vorsprungs 69 gegenüber dem Rohr der Sperrstellung und eine zweite Relativposition der Betätigungsstellung.

Als Anzeigemittel 71 sind ferner auf der Oberseite des Deckels 51 eingebrachte Ziffern "0" und "I" vorgesehen, die in Umfangsrichtung des Deckels in einem Winkelabstand von circa 45° angeordnet sind. Die Ziffer "0" befindet sich auf der Höhe des Vorsprungs 69 und die Ziffer "I" in Umfangsrichtung entsprechend versetzt dazu.

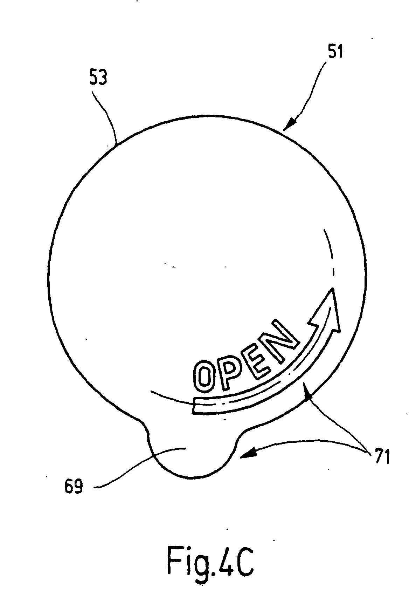

In Figur 3, die einen Querschnitt durch den Deckel 51 entlang der in Figur 4 dargestellten Schnittlinie A-A zeigt, ist zu erkennen, daß das in den Deckelboden integrierte Arretierelement 63 -in Umfangsrichtung des Deckels 51 gesehen- auf gleicher Höhe wie der Vorsprung 69 und radial nach innen versetzt angeordnet ist.

Aus Figur 4C ergeht eine Draufsicht auf ein weiteres Ausführungsbeispiel des Deckels 51 hervor, der sich von dem in Figur 4B dargestellten Deckel lediglich dadurch unterscheidet, daß er auf der Dekkeloberseite anstelle des großen -P- ein Firmenemblem aufweist. Des weiteren ist bei diesem Ausführungsbeispiel das Anzeigemittel 71 von dem Vorsprung 69 sowie von einem Schriftzug "OPEN" und einem die Drehrichtung des Deckels anzeigenden Pfeil gebildet.

Wie aus Figur 1 ersichtlich, ist an der dem Buchsenteil 5 zugewandten Stirnseite 73 der Lösehülse 43 ein als Schmutzschutz dienendes Dichtelement 75 vorgesehen, das hier von einer ringförmigen, axialen Dichtungslippe 77 gebildet ist, die in eine randoffene Ausnehmung an der Außenseite des zweiten Längsabschnitts 47 der Lösehulse 43 eingreift. Das Dichtelement 75 verhindert das Eindringen von Schmutz in den Zwischenraum zwischen der Lösehülse 43 und dem Buchsenteil 5 beziehungsweise dem das Buchsenteil 5 aufweisenden Bauteil, zum Beispiel ein Aggregat. Das anhand von Figur 1 beschriebene Dichtelement 75 kann alternativ an der dem Buchsenteil 5 zugewandten Stirnseite 73 der Lösehülse 43, an der Außenseite oder an der Innenseite der Lösehülse 43 angeordnet sein.

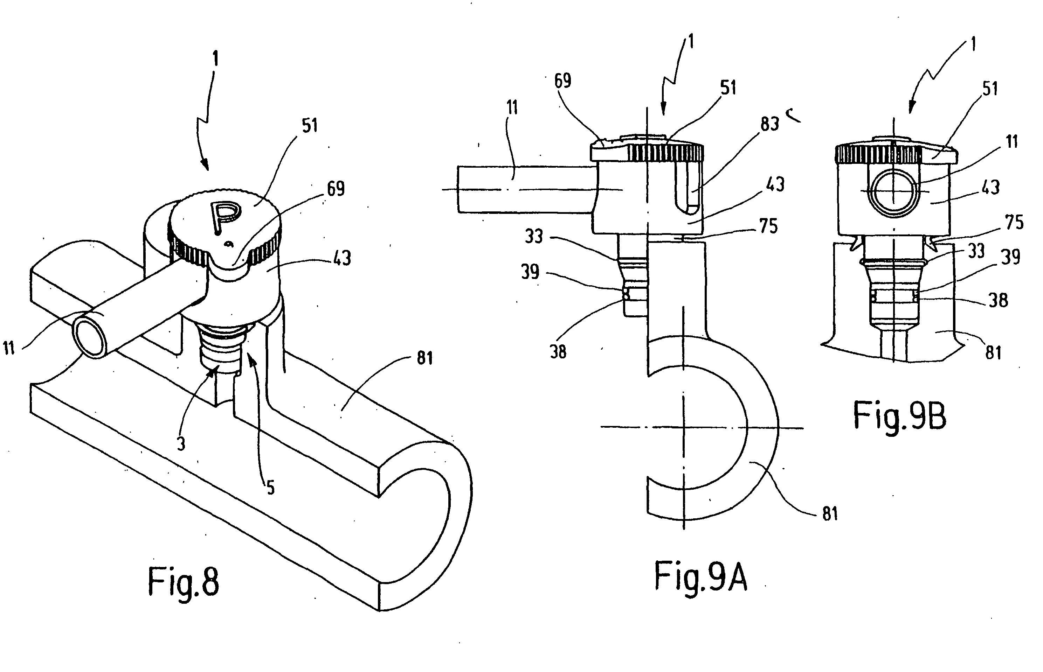

Figuren 6 und 8 zeigen jeweils eine perspektivische Darstellung der Kupplungseinrichtung 1, wobei der Deckel 51 sich in Figur 6 in der Sperrstellung und in Figur 8 in der Betätigungsstellung befindet. Figuren 7A und 7B zeigen jeweils eine zur Figur 6 zugehörige, teilweise geschnittene Seitenansicht der Kupplungseinrichtung 1 und Figuren 9A und 9B jeweils eine teilweise geschnittene Seitenansicht der Kupplungseinrichtung 1, wie sie in Figur 8 dargestellt ist. Gleiche Teile sind mit gleichen Bezugszeichen versehen, so daß insofern auf die Beschreibung zu den vorangegangen Figuren verwiesen wird.

Das Buchsenteil 5 ist hier einstückig mit einem im Längsschnitt dargestellten Aggregat 81 verbunden beziehungsweise ist in dieses integriert. Der Dekkel 51 ist bei der in den Figuren 6, 7A bzw. 7B dargestellten ersten Position in die Sperrstellung verschwenkt, in der der Vorsprung 69 am Deckel 51 oberhalb des Rohrs 11 angeordnet ist. Das Arretierelement 63 der Blockiereinrichtung 55 befindet sich ebenfalls oberhalb des Rohres 11 und stützt sich mit seiner Wandung 65 an der Außenkontur des Rohrs 11 ab (Figur 7B). Das Arretierelement 63 liegt also mit seiner Anlagefläche 67 an der Außenseite des Rohrs 11 an. Bei einem anderen, in den Figuren nicht dargestellten Ausführungsbeispiel ist das Arretierelement 63 in der Sperrstellung des Deckels 51 in einem, vorzugsweise geringen, Abstand zum Rohr 11 angeordnet. Beim Aufbringen einer Druckkraft (Pfeil 79) auf die Deckeloberseite verhindert das mit dem Rohr 11 zusammenwirkende Arretierelement 63 eine Verlagerung der Lösehülse 43 in Richtung des Sicherungsrings 33, so daß ein Lösen der Verriegelung nicht möglich ist.

In Figur 8 ist der Deckel 51 gegenüber seiner in Figur 6 dargestellten Position entgegen dem Uhrzeigersinn um seine Mittelachse 61 um circa eine Viertelumdrehung in die Betätigungsstellung verschwenkt, in der der Vorsprung 69 des Deckel 51 -in Draufsicht auf den Deckel 51 gesehen- seitlich vom Rohr 11 angeordnet ist. Beim Niederdrücken der Lösehülse 43 in Richtung des Pfeils 79 (Figur 1) stößt das Arretierelement 63 nicht gegen das Rohr 11, sondern passiert dieses seitlich. Dadurch kann die Lösehülse 43 soweit vertikal nach unten gedrückt werden, bis sich die Verriegelung löst.

Im folgenden wird auf die Funktion der Löseeinrichtung 41 und der Blockiervorrichtung 55 der Kupplungseinrichtung 1 näher eingegangen.

Die Kupplungseinrichtung 1 ist in Figur 1 im gekuppelten Zustand dargestellt. Das heißt, das Steckerteil 3 ist in das Buchsenteil 5 eingesteckt. Das freie Ende des Längsabschnitts 45 der Lösehülse 43 ist unmittelbar am Sicherungsring 33 angeordnet und hat bei Druckbeaufschlagung des Deckels 51 in axialer Richtung Kontakt mit dem Sicherungsring 33, um die Axialkraft an den Sicherungsring 33 zu übertragen. Der Außendurchmesser des Längsabschnitts 45 der Lösehülse 43 ist so gewählt, daß dieser mit geringem radialen Spiel durch die Innenwandung 27 des Buchsenteils 5 in axialer Richtung verlagerbar geführt ist. Im eingesteckten Zustand des Steckerteils 3 in das Buchsenteil 5 liegt die Dichtungslippe 77 an der der Lösehülse 43 zugewandten Stirnseite des Buchsenteils 5 dichtend an. Die Dichtungslippe 77 ist elastisch ausgebildet, so daß die Lösehülse 43 axial in Richtung auf das Buchsenteil 5 gedrückt werden kann. Gleichzeitig sorgt die Dichtungslippe 77 aufgrund ihrer Elastizität dafür, daß die Lösehülse 43 und somit das Steckerteil 3 mit einer entgegen der Einsteckrichtung gerichteten Kraft beaufschlagt werden, wodurch der Sicherungsring 33 zwischen dem durchmessergrößeren Abschnitt (Wulst 19) des ersten Längsabschnitts 17 und der Fläche 35 der Innenwandung 27 eingeklemmt ist. Dadurch ist die Kupplungseinrichtung 1 verriegelt.

Zum Lösen der Verriegelung wird in der in Figur 6 in einer Sperrstellung befindliche Deckel 51 entgegen dem Uhrzeigersinn um seine Mittelachse in die in Figur 8 dargestellte Betätigungsstellung verschwenkt. In der Betätigungsstellung des Deckels 51 ist das Arretierelement 63 -in axialer Richtung des Steckerteils 3 gesehen- versetzt zum Rohr 11 angeordnet, so daß durch eine Druckbeaufschlagung des Deckels 51 in Richtung des Buchsenteils 5 (Pfeil 79) die Lösehülse 43 axial verlagert und gegen den Sicherungsring 33 gedrückt wird. Dabei wird der Sicherungsring 33 in die Nut 31 im Buchsenteil 5 gedrängt, wodurch die Verriegelung der Kupplung gelöst ist und das Steckerteil 3 aus dem Buchsenteil 5 herausgezogen werden kann.

Die Lösehülse 43 ist vorzugsweise im Spritzgußverfahren hergestellt und kann aus Metall und/oder Kunststoff bestehen. Bei dem in den Figuren dargestellten Lösehülse 43 ist in deren Mantelfläche mindestens ein Durchbruch 83 vorgesehen (Figur 9A), der die Handhabbarkeit der Lösehülse 43 verbessert und eine Entfernung von grobem Schmutz, zum Beispiel Schlamm, mit beispielsweise einem Dampfstrahler ermöglicht. Selbstverständlich kann bei einer weiteren Ausführungsform der Lösehülse deren Mantelfläche geschlossen sein, also keinen Durchbruch aufweisen.

Besonders vorteilhaft bei dem anhand der Figuren beschriebenen Ausführungsbeispiel ist neben dem einfachen Lösen der Verriegelung der Kupplungseinrichtung durch Niederdrücken der Lösehülse 43, daß sowohl das Dichtelement 75 als auch die Dichtmittel 37 in der Lösehülse 43 beziehungsweise am Steckerteil 3 verbleiben. Dadurch kann der Aufbau des Buchsenteils 5 vereinfacht werden. Überdies ist für jeden Kupplungsvorgang ein Austausch des Dichtelements 75 und/oder des Dichtmittels 37 möglich.

Allen Ausführungsbeispielen der Kupplungseinrichtung 1 ist gemeinsam, daß sie einen einfachen und somit kostengünstigen Aufbau aufweisen und überdies in einfacher Weise mit vorzugsweise geringen Kräften bei hohem Bedienkomfort entriegelbar sind. Aufgrund der Blockiervorrichtung 55 kann ein unbeabsichtigtes Lösen der Verriegelung ausgeschlossen werden. Die Ausgestaltung der Blockiervorrichtung 55 ist praktisch beliebig, beispielsweise kann das Gegenelement, mit dem das Arretierelement 63 zusammenwirkt, von dem das Buchsenteil aufweisenden Bauteil gebildet sein. Wichtig ist, daß die Blockiervorrichtung eine einfache Verlagerung des Deckels 51 in die Sperr- beziehungsweise Betätigungsstellung ermöglicht und vorzugsweise einfach herstellbar ist. Selbstverständlich kann die Blockiervorrichtung auch dergestalt sein, daß sie unmittelbar mit der Lösehülse 43 zusammenwirkt, wobei deren Deckel hierbei als Abdeckung des dem Buchsenteil abgewandten Endes der Lösehülse und als Betätigungselement zum Lösen der Verriegelung dient.

Bei einem in den Figuren nicht dargestellten Ausführungsbeispiel der Kupplungseinrichtung 1 ist zwischen dem zweiten Längsabschnitt 21 des Steckerteils 3 und dem Boden 49 der Lösehülse 43 eine Dichtung, insbesondere Flachdichtung, angeordnet, die ein Eindringen von Schmutz in den Spalt zwischen dem Steckerteil und der Lösehülse verhindert. Die Flachdichtung dient gleichzeitig als Anschlagfläche für das Steckerteil.

Der Kupplungseinrichtung 1 kann auch mindestens ein Indikatorelement zugeordnet sein, das die Verbindung der beiden Kupplungsteile (Buchsenteil/ Stekkerteil) anzeigt.

## Patentansprüche

1. Kupplungseinrichtung (1) zum Verbinden von zwei Teilen, mit einem Steckerteil (3) und einem Buchsenteil (5), die ineinander steckbar ausgebildet und mittels eines aufweitbaren Sicherungsrings (33) verriegelbar sind, und mit einer axial verlagerbar angeordneten Löseeinrichtung (41), die zum Lösen der Verriegelung mit dem Sicherungsring zusammenwirkt, **dadurch gekennzeichnet, daß** die Löseeinrichtung (41) eine Lösehülse (43) umfaßt, die auf ihrer dem Buchsenteil (5) abgewandten Seite mit einem Deckel (51) verschließbar ist, und daß mit Hilfe einer Blockiervorrichtung (55) ein unbeabsichtigtes Lösen der Kupplung verhinderbar ist.

2. Kupplungseinrichtung nach Anspruch 1, **dadurch gekennzeichnet, daß** der Deckel (51) Teil der Blokkiervorrichtung (55) ist und in eine Sperrstellung, in der ein Lösen der Kupplung verhindert ist, und in eine Betätigungsstellung, in der ein Lösen der Kupplung möglich ist, verlagerbar ist.

3. Kupplungseinrichtung nach Anspruch 1 oder 2, **dadurch gekennzeichnet, daß** der Deckel (51) um eine Achse, vorzugsweise um seine Mittelachse (61), schwenkbar ist.

4. Kupplungseinrichtung nach einem der vorhergehenden Ansprüche, **dadurch gekennzeichnet, daß** der Dekkel (51) einen umlaufenden Bund (53) aufweist, der einen Teil der Lösehülse (43) übergreift.

5. Kupplungseinrichtung nach einem der vorhergehenden Ansprüche, **dadurch gekennzeichnet, daß** der Dekkel (51) mit Hilfe einer -vorzugsweise nicht lösbaren- Schnappverbindung (57) an der Lösehülse (43) gehalten ist.

6. Kupplungseinrichtung nach einem der vorhergehenden Ansprüche, **dadurch gekennzeichnet, daß** auf der Innenseite des Deckels (51) ein Arretierelement (63) vorgesehen ist, das in der Sperrstellung mit einem Gegenelement (11) zusammenwirkt.

7. Kupplungseinrichtung nach einem der vorhergehenden Ansprüche, **dadurch gekennzeichnet, daß** das Arretierelement (63) von einer über einen kleinen Umfangsbereich des Deckels (51) erstreckende, vorzugsweise aus einem flexiblen Material bestehende Wandung (65) gebildet ist.

8. Kupplungseinrichtung nach Anspruch 7, **dadurch gekennzeichnet, daß** die Wandung (65) eine an die Außenkontur des Gegenelements (11) entsprechend angepaßte Anlagefläche (67) aufweist.

9. Kupplungseinrichtung nach einem der vorhergehenden Ansprüche, **dadurch gekennzeichnet, daß** der Dekkel (51) -in Draufsicht gesehen- größtenteils eine im wesentlichen kreisrunde Außenkontur aufweist.

10. Kupplungseinrichtung nach einem der vorhergehenden Ansprüche, **gekennzeichnet durch** ein mindestens eine der Funktionsstellungen, d.h. Sperr-/Betätigungsstellung des Deckels (51) anzeigendes Anzeigemittel (71).

11. Kupplungseinrichtung nach Anspruch 10, **dadurch gekennzeichnet, daß** das Anzeigemittel (71) von einem von der Außenumfangsfläche des Deckels (51) entspringenden, in Draufsicht gesehen nasenförmigen Vorsprung (69) gebildet ist.

12. Kupplungseinrichtung nach einem der Ansprüche 10 oder 11, **dadurch gekennzeichnet, daß** das Anzeigemittel (71) eine Prägung, eine farbliche Markierung oder dergleichen ist.

## Claims

1. Coupling system (1) for connecting two parts, with a plug-in part (3) and a socket part (5), which are formed such that they can be fitted into one another and can be interlocked by means of an expandable retaining ring (33), and with a release system (41), which is disposed so as to be axially displaceable and co-operates with the retaining ring to release the interlock, **characterised in that** the release system (41) comprises a release sleeve (43), which can be closed by a cover (51) on its side remote from the socket part (5), and that unintentional release of the coupling can be prevented by means of a blocking device (55).

2. Coupling system according to Claim 1, **characterised in that** the cover (51) is part of the blocking device (55) and can be displaced into a locking position, in which the coupling cannot be released, and into an actuating position, in which the coupling can be released.

3. Coupling system according to Claim 1 or 2, **characterised in that** the cover (51) can be pivoted about an axis, preferably about its central axis (61).

4. Coupling system according to any one of the preceding Claims, **characterised in that** the cover (51) has a circumferential collar (53), which engages over a part of the release sleeve (43).

5. Coupling system according to any one of the preceding Claims, **characterised in that** the cover (51) is held on the release sleeve (43) by means of a - preferably non-releasable - snap connection (57).

6. Coupling system according to any one of the preceding Claims, **characterised in that** a detent element (63) is provided on the inside of the cover (51), which element co-operates with a counterelement (11) in the locking position.

7. Coupling system according to any one of the preceding Claims, **characterised in that** the detent element (63) is formed by a wall (65) which extends over a small circumferential region of the cover (51) and preferably consists of a flexible material.

8. Coupling system according to Claim 7, **characterised in that** the wall (65) has a contact surface (67) which is appropriately adapted to the outer contour of the counterelement (11).

9. Coupling system according to any one of the preceding Claims, **characterised in that** - considered in plan view - the cover (51) has for the most part a substantially circular outer contour.

10. Coupling system according to any one of the preceding Claims, **characterised by** an indicator means (71) which indicates at least one of the functional positions, i.e. locking/actuating position, of the cover (51).

11. Coupling system according to Claim 10, **characterised in that** the indicator means (71) is formed by a projection (69) which issues from the outer circumferential surface of the cover (51) and is nose-shaped when considered in plan view.

12. Coupling system according to either of Claims 10 and 11, **characterised in that** the indicator means (71) is an embossing, a colour marking or similar.

## Revendications

1. Dispositif d'accouplement (1) pour relier deux parties, avec une partie formant un connecteur mâle (3) et une partie formant un manchon (5), qui sont configurées pour être enfichées l'une dans l'autre et qui peuvent être verrouillées à l'aide d'une bague de blocage (33) pouvant être évasée, et avec un dispositif de desserrage disposé pour être déplaçable dans le sens axial (41), qui agit de concert avec la bague de blocage pour le desserrage du verrouillage, **caractérisé en ce que** le dispositif de desserrage (41) comprend une douille de desserrage (43), qui peut être fermée par un couvercle (51) sur son côté opposé à la partie formant un manchon (5) et **en ce qu'**une dissociation inopinée de l'accouplement peut être évitée par un système de blocage (55).

2. Dispositif d'accouplement selon la revendication 1, **caractérisé en ce que** le couvercle (51) est une partie constituante du système de blocage (55) et peut être déplacé dans une position de verrouillage, dans laquelle une dissociation de l'accouplement est évitée, et dans une position d'actionnement, dans laquelle une dissociation de l'accouplement est possible.

3. Dispositif d'accouplement selon la revendication 1 ou 2, **caractérisé en ce que** le couvercle (51) peut être pivoté autour d'un axe, de préférence autour de son axe médian (61).

4. Dispositif d'accouplement selon l'une des revendications précédentes, **caractérisé en ce que** le couvercle (51) est muni d'une collerette circulaire (53), qui recouvre une partie de la douille de desserrage (43).

5. Dispositif d'accouplement selon l'une des revendications précédentes, **caractérisé en ce que** le couvercle (51) est maintenu sur la douille de desserrage (43) à l'aide d'une liaison à encliquetage (57), de préférence non dissociable.

6. Dispositif d'accouplement selon l'une des revendications précédentes, **caractérisé en ce que** sur le côté intérieur du couvercle (51) est prévu un élément d'arrêt (63) qui, en position de verrouillage, agit de concert avec un élément opposé (11).

7. Dispositif d'accouplement selon l'une des revendications précédentes, **caractérisé en ce que** l'élément d'arrêt (63) est formé par une paroi (65) s'étendant sur une petite zone circulaire du couvercle (51) et se composant de préférence d'un matériau souple.

8. Dispositif d'accouplement selon la revendication 7, **caractérisé en ce que** la paroi (65) présente une surface d'appui (67) adaptée de manière correspondante au contour extérieur de l'élément opposé (11).

9. Dispositif d'accouplement selon l'une des revendications précédentes, **caractérisé en ce que** dans une vue en plan le couvercle (51) présente dans sa plus grande partie un contour extérieur sensiblement circulaire.

10. Dispositif d'accouplement selon l'une des revendications précédentes, **caractérisé en ce qu'**il comprend un élément de signalisation (71) indiquant au moins une des positions fonctionnelles, c'est à dire la position de verrouillage ou la position d'actionnement, du couvercle (51).

11. Dispositif d'accouplement selon la revendication 10, **caractérisé en ce que** l'élément de signalisation (71) est formé par une avancée dépassant de la surface extérieure circulaire du couvercle (51) et qui, dans une vue en plan, à la forme d'un nez (69).

12. Dispositif d'accouplement selon l'une des revendications 10 ou 11, **caractérisé en ce que** l'élément de signalisation (71.) est un marquage par une empreinte, un marquage en couleur ou une indication similaire.
